# EUROPEAN PATENT SPECIFICATION

(11) **EP 0 910 463 B1**
(45) Date of publication and mention of the grant of the patent: **18.12.2002**
(21) Application number: 97927495.8
(22) Date of filing: 27.06.1997
(51) Int. Cl.: B01J 2/02, B01J 2/00, B05B 5/08, B01J 14/00, B01J 19/08

(54) **METHOD OF MANUFACTURING A DRY POWDER PARTICLE, A POWDER PRODUCED WITH SAID METHOD, AND AN ELECTRODE AND AN APPARATUS FOR USE IN SAID METHOD**
VERFAHREN ZUR HERSTELLUNG VON TROCKENEN PULVERTEILCHEN, PULVER HERGESTELLT DURCH DIESES VERFAHREN UND EINE ELEKTRODE UND EINE VORRICHTUNG ZUR ANWENDUNG IN DIESEM VERFAHREN
PROCEDE POUR FABRIQUER DES PARTICULES DE POUDRE SECHE, POUDRE PRODUITE SELON LEDIT PROCEDE, ET ELECTRODE ET DISPOSITIF DESTINES AUDIT PROCEDE

(30) Priority: 27.06.1996 NL 1003442
(43) Date of publication of application: 28.04.1999
(73) Proprietor: TECHNISCHE UNIVERSITEIT DELFT, 2628 BL Delft (NL)
(72) Inventor: BORRA, Jean-Pascal, Dominique, Maurice, NL-2562 CC Den Haag (NL)
(74) Representative: Van Breda, Jacobus
(86) International application number: PCT/NL97/00366
(87) International publication number: WO 97/049484

(56) References cited:
- DE-A- 3 126 854
- FR-A- 1 360 193
- US-A- 2 685 537
- US-A- 4 383 767

## Description

This invention relates to a method of manufacturing a dry powder particle by generating a charged aerosol stream comprised of charged initially liquid particles and converting said stream into powder particles.

Such a method is well known in the state of the art. By passing a liquid, comprising a solute dissolved in a solvent, through a narrow orifice using high voltage, a charged aerosol stream is generated comprised of charged liquid particles. Evaporation of the solvent results in a fine powder with a relatively narrow size distribution. This process, known as electrohydrodynamic spraying, is for example suitable for the manufacture of polymeric powders used for electrostatic spraying during powder coating.

The objects of the present invention are to expand the application possibilities of said method, and in particular to provide a method allowing for the manufacture of powders which could not be produced so far, and to improve the quality of powders produced using said method.

To this end the method according to the invention is characterized in that the charged aerosol stream comprised of charged particles while comprising liquid is contacted with a second aerosol stream comprising oppositely charged particles, said aerosol streams being generated by electro-hydrodynamic spraying, resulting into a combined aerosol stream to form the dry powder particle, and after contacting the first aerosol stream with the second aerosol stream, particles with the desired composition are separated according to their charge to mass ratio.

Thus the present invention provides a method for the manufacture of dry powder particles, which together constitute a powder, which powder is comprised of less charged or substantially neutral particles. The method allows for, for example, the use of aerosol streams of different composition enabling physical and chemical reactions to occur, and for the coating of particles. In any case, the separation by charge to mass ratio results in powder having well-defined properties, for example a desired composition. Electro-hydrodynamic spraying allows for the generation of charged aerosol streams having well defined particle size distributions, wherein the liquid particles are charged at the instant the liquid particle is formed, i.e. the droplets do not have to be charged afterwards in a separate charging step.

US 4,383,767 relates to a method of blending particles, in particular to create mixtures of fuel and water. The liquids are sprayed electrohydrodynamically. Mention is made of creating a mixture of powders, or mixing a liquid with a powder.

It is also known to manufacture a homogeneous mixture by contacting charged granules with an oppositely charged powder (Thesis of P. Vercoulen; Electrostatic processing of particles. Technical University of Delft, the Netherlands). To this end a powder, comprising particles in the micron range, is sprayed and subsequently charged, for example using a corona discharge device, before being contacted with oppositely charged solid granules having diameters in the order of 2 mm. The particulate starting materials were manufactured using conventional techniques, i.e. grinding.

According to a preferred embodiment of the invention the amount of charge of the first aerosol stream and the amount of charge of the second aerosol stream are controlled to yield a substantially neutral powder.

Charged powders manufactured according to the state of the art tend to form agglomerates, making them less suitable in the manufacture of high quality finished surfaces. The charged powders also tend to clog up pipelines, which interferes with both production of the powder and use thereof. Thus, the method according to the invention provides a powder having an improved industrial applicability while in addition a higher yield of powder can be obtained than previously achievable.

According to a preferred embodiment the first aerosol stream comprises particles comprising a solvent and a solute, said solvent being evaporated to yield a substantially dry powder particle.

This allows for the manufacture of a powder particle comprising two or more attached subunits. This method is characterized in that a part of the solvent is evaporated from the first aerosol stream to form a first aerosol stream being composed of solid, sticky charged particles which is contacted with the second charged aerosol stream comprising solid charged particles resulting in the combined aerosol stream which is converted into an essentially dry powder. Thus it is possible to make aerosol particles with a specific shape, the subunits having the same or a different composition.

A particularly preferred embodiment of the method according to the invention is characterized in that, when contacted, both the first and the second aerosol stream comprise liquid charged particles.

This embodiment allows for a multitude of physical and chemical reactions to occur.

Yet another preferred method of manufacturing a powder according to the invention is characterized in that at least the first aerosol stream, being comprised of larger particles and satellite particles, is subjected to a particle separation step providing a substantially monodisperse aerosol stream whereafter the substantially monodisperse aerosol stream is contacted with the oppositely charged aerosol stream.

This embodiment, which is especially useful with electrohydrodynamic spraying, provides for a powder to be produced having a even narrower particle size distribution. Accordingly it is preferred that both the first and the second aerosol stream are subjected to the particle separation step.

According to an advantageous embodiment, the separation step is conducted using a grounded electrode. The grounded electrode, placed near or in that part of the aerosol stream where the particles to be removed pass and more distantly spaced from the desired particles, serves as a simple and effective means to attract and remove the unwanted particles. Thus an aerosol stream enriched in the desired particles is obtained and subsequently brought into contact with the oppositely charged aerosol stream.

The invention also relates to a method of preparing a pharmaceutical composition, said pharmaceutical composition comprising a powder comprising at least one pharmaceutically active compound together with a pharmaceutically acceptable carrier or diluent, characterized in that pharmaceutical compound-comprising powder particles are manufactured according to the invention. Preferrably, the pharmaceutical compound-comprising powder particle is a coated powder particle.

Moreover, the present invention relates to a method of manufacturing a ceramic product, characterized in that ceramic precursor powder particles are manufactured according to the invention, after which said particles are sintered.

The method allows for the manufacture of very fine ceramic precursor powders without grinding as well as powders with compositions which until now could not be obtained or only with great difficulty. If the above mentioned separation step is performed, providing two aerosol streams comprised of satellite droplets, highly desired ceramic precursor nanoparticles can be obtained, suitable for defect free ceramic products.

Finally, the invention relates to an apparatus for working the method according to the invention, comprising an electrode having an inlet and an outlet, a channel connecting the inlet and the outlet, the outlet being an orifice in the centre of an electrically conducting area opening into a chamber, wherein the electrically conducting area is defined by a barrier, said barrier preventing the flow of liquid beyond the electrically conducting area and the chamber having a counter electrode as well as an exhaust opening for a product formed by electro-hydrodynamic spraying.

The apparatus is characterized in that the chamber is a mixing chamber and the apparatus is provided with a second electrode having an orifice opening into the chamber.

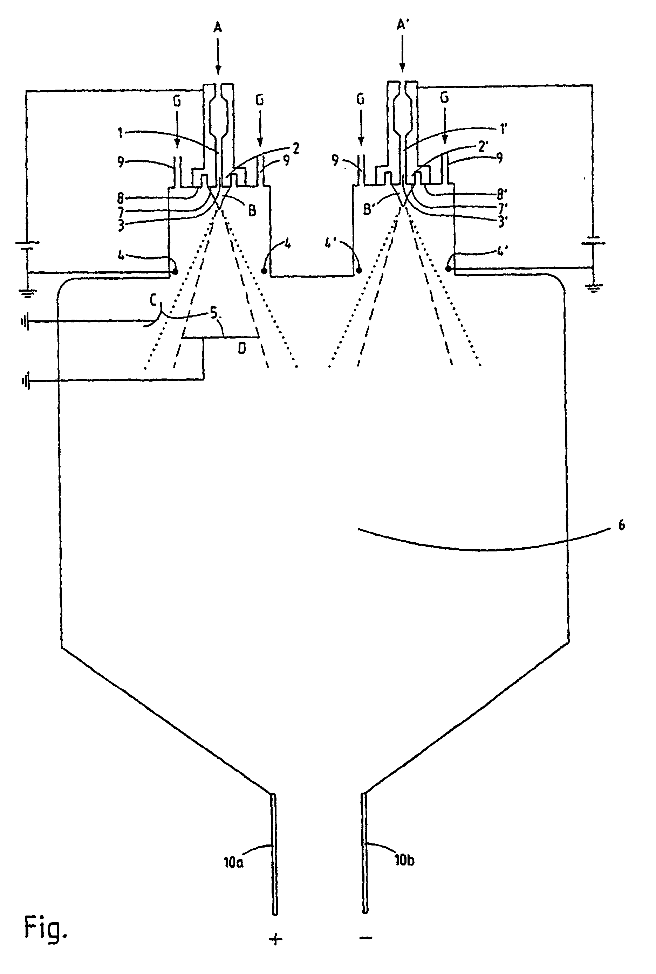

The invention will be hereinafter explained in more detail with reference to the drawing, in which the only figure represents a schematic cross sectional view of an apparatus for working the method according to the invention.

The present invention provides a method for contacting a first charged aerosol stream comprised of charged particles with a second aerosol stream comprised of oppositely charged particles in a mixing zone resulting into a combined aerosol stream which is subsequently converted into a powder. Particles making up an aerosol stream have a diameter of 100 µm or less - usually in the micron range.

Advantageously the first charged aerosol stream is generated using electrohydrodynamic spraying, which method is well known in the art. A liquid A is passed via a channel 1 through a narrow orifice 2, for example with a diameter of 0,2 mm, of a nozzle 3. A high voltage, typically 5 - 30 kV is supplied over the nozzle 3 and an annular grounded counter electrode 4. The high voltage accelerates the liquid A through channel 1 and towards the annular counter electrode 4. At the orifice 1 a liquid jet B emerges which breaks up into charged droplets forming a conical stream of droplets having narrow size, charge density and velocity distribution. Because of their initial speed the droplets do not encounter the counter electrode 4. During the breaking up process smaller droplets, known as satellite droplets, are created as well, resulting in a bi-modal particle size distribution. These satellite droplets, being very small, end up in the outer periphery of the conical aerosol stream.

If desired it is possible to eliminate one of both types of droplets by suitably placing a grounded electrode 5 near its path, for example in position C for the removal of the satellite droplets or in position D for the removal of the larger droplets.

The charged aerosol stream comprised of charged droplets is contacted with an oppositely charged second aerosol stream in a mixing zone 6. This second aerosol stream may be comprised of liquid particles, i.e. droplets, or solid particles.

Due to the opposite charge of the particles of each aerosol stream, the particles of the different aerosol streams are attracted to each other and combine, forming less charged and even neutral particles.

Advantageously the amount of charge of the first aerosol stream and the amount of charge of the second aerosol stream are controlled to yield a neutral powder. This can be achieved in several ways, two of which are discussed. Firstly, the amount of charge per second of the first aerosol stream should be equal to the amount of charge per second of the second aerosol stream. Secondly, if one of the streams consists of very many fine particles in comparison to the particles of the other stream, many fine particles will be needed to neutralize a large particle, allowing accurate neutralization of the large particle. Thus it may be possible to increase the yield of neutral particles. An aerosol stream comprising very small particles may be obtained exploiting the Rayleigh break-up phenomenon, which occurs when the charge density in a particle becomes too high, due to evaporation of a solvent. The very fine particles may be used in excess, the surplus being wasted. To waste the surplus, a charged electrode may be used and advantageously the very fine particles consist of a volatile solvent only.

Mixing of the aerosol streams can be enhanced by supplying a gas G, usually an inert gas, to the mixing zone 6 where the first and the second aerosol stream are contacted. The gas flow also provides a convenient way to carry off the powder formed. The gas G may be supplied through inlets 9 and prevents space charge accumulation in front of the nozzles 3, which would result in an increase in electrical field intensity and unstable aerosol streams.

The method according to the invention results in a powder comprised of less charged or substantially neutral particles. Charged product particles may be removed using a grounded electrode yielding a product stream of substantially neutral particles, or classified according to their charge to mass ratio using charged electrodes 10a, 10b. Such a separation may be very valuable, for example to select particles with a desired composition. The manufacture of powders of various composition will be discussed below.

As stated earlier, the second aerosol stream may be comprised of liquid particles, i.e. droplets, or solid particles. If the second aerosol stream is comprised of solid particles these may have been charged tribologically or by using for example a corona discharge device. However, preferably the second aerosol stream is generated (both for solid and liquid particles) using electrohydrodynamic spraying as well, as shown in the figure, wherein parts indicated with reference numerals with an apostrophe correspond to those mentioned above having the same number. Using a solute-containing liquid, evaporation of the solvent before contacting the stream results in charged solid particles quickly and efficiently.

If the first aerosol stream is composed of liquid particles while contacting the second aerosol stream, it is possible to manufacture coated particles. Coated particles are for example of interest in the manufacture of pharmaceutical compositions, for example for the quick, delayed or sustained release of a pharmaceutically active compound. When it is desired to coat a liquid particle, it may be necessary to incorporate a surfactant.

Contacting the first charged aerosol stream with a second charged aerosol stream of liquid particles opens a whole range of possibilities to manufacture particles with various composition.

According to a preferred embodiment the liquid of the first aerosol stream comprises a first agent and the liquid of the second aerosol stream comprises a second agent. Thus it is possible to perform many physical and chemical reactions in very tiny droplets.

For example, if the liquids of the first and the second aerosol stream are miscible, homogeneous physical or chemical processes may occur in each newly formed droplet. If the liquids are immiscible heterogeneous processes may occur. Typical physical processes include precipitation and crystallization processes. Thus the method according to the invention may, for example, result in particles each comprising an amorphous mixture of compounds which were originally present in each of the aerosol streams, or a crystal. In this way it is for example possible to manufacture ceramic precursor powders. Amongst the ceramic precursor powders those for the manufacture of high temperature superconductors can be mentioned.

A potentially useful embodiment comprises contacting a water miscible organic solvent comprising a not or sparingly water soluble polymer with an oppositely charged aqueous aerosol stream, the water causing the polymer to precipitate. Another simple way to obtain a precipitate is by using an alkaline and acid liquid for the respective aerosol streams, if the solubility of the solute is pH dependent.

A preferred embodiment of the method according to the invention is characterized in that the liquid of the first aerosol stream comprises a first reagent and the liquid of the second aerosol stream comprises a second reagent and the reaction comprises a chemical reaction. In the present application the term "reagent" includes chemical or biological catalysts, for example an enzyme.

Due to chemical reactions the product particle may contain a new compound. The chemical reaction may be virtually any chemical reaction, for example a polymerisation reaction.

In case of a heterogeneous reaction, the invention allows for the preparation of compounds which can not be obtained efficiently by mixing the liquids in bulk, for example due to the formation of a solid reaction product preventing the remaining reagents from reacting.

The invention also relates to an electrode, suitable for use with the method according to the invention employing electrohydrodynamic spraying, having an inlet and an outlet, a channel connecting the inlet and the outlet, the outlet being an orifice in the centre of an electrically conducting area 7, wherein the electrically conducting area 7 is defined by a barrier, said barrier preventing the flow of liquid outside the electrically conducting area 7.

According to the invention the electrode is characterized in that the electrically conducting area 7 is surrounded by a second area 8 of electrically conducting material, extending outwardly over at least 1 mm in radial direction from said barrier, preferably over a distance of at least half of the radius of the first area.

Thus a more homogenous electric field is generated, with a reduced radial component of the electrical field, near the nozzle 3. This is very important to avoid electrical discharges which would result in disturbed mixing of the first and second aerosol stream. The use of said electrode improves the size, charge density and velocity distribution of an aerosol stream generated using said electrode. In addition the electrode allows for the use of liquids with higher conductivities than with electrodes according to the state of the art.

The barrier may be, as shown in the figure, a steep recess, the wall thereof being for example at an angle of 90° with the first area. Preferably the first and second area lie in the same plane. Advantageously they are electrically connected.

It should be clear from the above, that the method according to the invention can be used to manufacture a powder consisting of less charged or substantially neutral particles wherein each particle contains each of the compounds used, or a powder consisting of particles comprising a compound not present in the starting materials.

The present invention allows for the manufacture of powders which were previously only obtainable using emulsion techniques, which require the evaporation/removal of the solvent, making the techniques cumbersome and expensive.

The invention may also be used to control the size, structure and shape of the particles that make up the powder. By controlling the rate of evaporation of a solvent used, the person skilled in the art can achieve powders of, for example, porous, hollow or massive particles. Porous or amorphous particles may find application as catalysts. For coated particles, the thickness of coatings can be controlled by suitable choice of the solute concentration and droplet size. The rate of evaporation can be controlled by a suitable choice of solvent, heating (micro-wave, gas supplied at a particular temperature), suitable choice of the aerosol streams etc., as is well known by the person skilled in the art.

It will be appreciated that the present invention, as claimed in the appended claims, can be worked in several ways, as will be obvious for the person skilled in the art. For example, if mention is made of a liquid, the liquid may also comprise a molten solid. It is possible to improve the size distribution of an aerosol stream by, for example, superposing a high frequency alternating voltage on top of the constant voltage.

Rayleigh-break up may be used to generate droplets even smaller than satellite droplets and thus allow for the manufacture of extremely fine powders. Preferably a separation step is carried out before the aerosol stream generated is contacted with the second aerosol stream, as described above.

Apart from those already mentioned, the powders manufactured according to the invention will have many -other uses, for example for calibration purposes and as seed material.

For scaling up the method according to the invention, an array of nozzles can be used, for example rows of nozzles with alternating a row for positively charged aerosol streams and a row for negatively charged aerosol streams. Advantageously, the nozzles are supplied with liquid from one supply, or in case of different liquids from two supplies only, and likewise the voltage can be supplied using one power supply for each polarity only.

The apparatus according to the invention may be provided with a moving counter electrode and/or electrode for the removal of charged particles, for example realised as a conveyor belt. Any particles adhering to the electrode are removed outside the mixing zone, for example outside the chamber, and are - depending on the type of powder formed - reused or disposed of.

## Claims

1. Method of manufacturing a dry powder particle by generating a charged aerosol stream comprised of charged initially liquid particles and converting said stream into powder particles, **characterized in that** the charged aerosol stream comprised of charged particles while comprising liquid is contacted with a second aerosol stream comprising oppositely charged particles, said aerosol streams being generated by electro-hydrodynamic spraying, resulting into a combined aerosol stream to form the dry powder particle, and after contacting the first aerosol stream with the second aerosol stream, particles with the desired composition are separated according to their charge to mass ratio.

2. Method of manufacturing a powder particle according to claim 1, **characterized in that** the amount of charge of the first aerosol stream and the amount of charge of the second aerosol stream are controlled to yield a substantially neutral powder particle.

3. Method of manufacturing a powder particle according to claim 1 or 2, **characterized in that** the first aerosol stream is comprised of liquid particles comprising a solvent and a solute, said solvent being evaporated to yield a substantially dry powder particle.

4. Method of manufacturing a powder particle according to claim 3, **characterized in that** the first aerosol stream and second aerosol stream are contacted before the solvent is evaporated.

5. Method of manufacturing a powder particle according to any of the preceding claims, **characterized in that**, when contacted, both the first and the second aerosol stream comprise liquid charged particles.

6. Method of manufacturing a powder particle according to claim 5, **characterized in that** the first aerosol stream is generated using a liquid which is miscible with the liquid used to generate the second aerosol stream, allowing a homogeneous reaction to occur after contact.

7. Method of manufacturing a powder particle according to claim 5, **characterized in that** the first aerosol stream is generated using a liquid which is immiscible with the liquid used to generate the second aerosol stream, allowing a heterogeneous reaction to occur after contact.

8. Method of manufacturing a powder particle according to claim 6 or 7, **characterized in that** the liquid of the first aerosol stream comprises a first reagent and the liquid of the second aerosol stream comprises a second reagent and the reaction comprises a chemical reaction.

9. Method of manufacturing a powder particle according to any of the preceding claims, **characterized in that** at least the first aerosol stream, being comprised of larger particles and satellite particles, is subjected to a particle separation step providing a substantially monodisperse aerosol stream whereafter the substantially monodisperse aerosol stream is contacted with the oppositely charged aerosol stream.

10. Method of manufacturing a powder particle according to claim 9, **characterized in that** both the first and the second aerosol stream are subjected to the particle separation step.

11. Method of manufacturing a powder particle according to claim 9 or 10, **characterized in that** the separation step is conducted using a grounded electrode.

12. Method of manufacturing a powder particle according to claim 4, **characterized in that** the solvent is evaporated from the first aerosol stream to form a first aerosol stream being composed of solid, sticky charged particles which is contacted with the second charged aerosol stream comprising solid charged particles resulting in the combined aerosol stream which is converted into an essentially dry powder.

13. Method of manufacturing a powder particle according to any of the preceding claims, **characterized in that** substantially neutral particles are separated from substantially charged particles.

14. Method of preparing a pharmaceutical composition, said pharmaceutical composition comprising a powder comprising at least one pharmaceutically active compound together with a pharmaceutically acceptable carrier or diluent, **characterized in that** pharmaceutical compound-comprising powder particles are manufactured according to any of the claims 1 - 13.

15. Method according to claim 14, **characterized in that** the pharmaceutical compound comprising powder particle is a coated powder particle.

16. Method of manufacturing a ceramic product, **characterized in that** ceramic precursor powder particles are manufactured according to any of the claims 1 to 13, after which said particles are sintered.

17. Electrode, suitable for use in the method according to any of the claims 1 to 14, having an inlet and an outlet, a channel connecting the inlet and the outlet, the outlet being an orifice in the centre of an electrically conducting area, wherein the electrically conducting area is defined by a barrier, said barrier preventing the flow of liquid outside the electrically conducting area, **characterized in that** the electrically conducting area is surrounded by a second area of electrically conducting material, extending outwardly over at least 1 mm in radial direction from said barrier.

18. Electrode according to claim 17, **characterized in that** the second area extends over a distance of at least half of the radius of the first area.

19. Apparatus for working the method according to any of the claims 1 to 13, comprising an electrode having an inlet and an outlet, a channel connecting the inlet and the outlet, the outlet being an orifice in the centre of an electrically conducting area opening into a chamber, wherein the electrically conducting area is defined by a barrier, said barrier preventing the flow of liquid beyond the electrically conducting area and the chamber having a counter electrode as well as an exhaust opening for a product formed by electro-hydrodynamic spraying, **characterized in that** the chamber is a mixing chamber and the apparatus is provided with a second electrode having an orifice opening in the chamber.

## Patentansprüche

1. Verfahren zur Herstellung von trockenen Pulverteilchen durch Erzeugung eines geladenen Aerosolstromes, welcher geladene, ursprünglich flüssige Partikel enthält, und Umwandlung des Stromes in Pulverteilchen, **dadurch gekennzeichnet, dass** der geladene Aerosolstrom, welcher geladene Partikel umfasst, solange diese flüssig sind, mit einem zweiten Aerosolstrom in Kontakt gebracht wird, welcher entgegengesetzt geladene Partikel enthält, wobei die Aerosolströme, die durch elektro-hydrodynamisches Sprühen erzeugt werden, einen kombinierten Aerosolstrom ergeben, um die trockenen Pulverteilchen zu bilden, und nach dem Kontakt des ersten Aerosolstromes mit dem zweiten Aerosolstrom werden die Partikel mit der gewünschten Zusammensetzung entsprechend ihrer Ladung im Massenverhältnis abgesondert.

2. Verfahren zur Herstellung von Pulverteilchen nach Anspruch 1, **dadurch gekennzeichnet, dass** die Größe der Ladung des ersten Aerosolstromes und die Größe der Ladung des zweiten Aerosolstromes gesteuert werden, um im Wesentlichen neutrale Pulverteilchen zu gewinnen.

3. Verfahren zur Herstellung von Pulverteilchen nach den Ansprüchen 1 oder 2, **dadurch gekennzeichnet, dass** der erste Aerosolstrom flüssige Partikel enthält, welche ein Lösungsmittel und einen gelösten Stoff umfassen, wobei das Lösungsmittel verdampft wird, um im Wesentlichen trockene Pulverteilchen zu gewinnen.

4. Verfahren zur Herstellung von Pulverteilchen nach Anspruch 3, **dadurch gekennzeichnet, dass** der erste Aerosolstrom und der zweite Aerosolstrom miteinander in Kontakt gebracht werden, bevor das Lösungsmittel verdampft wird.

5. Verfahren zur Herstellung von Pulverteilchen nach einem oder mehreren der vorhergehenden Ansprüche, **dadurch gekennzeichnet, dass** sowohl der erste als auch der zweite Aerosolstrom, wenn sie in Kontakt gebracht werden, flüssige geladene Partikel enthalten.

6. Verfahren zur Herstellung von Pulverteilchen nach Anspruch 5, **dadurch gekennzeichnet, dass** der erste Aerosolstrom unter Verwendung einer Flüssigkeit erzeugt wird, die mit der Flüssigkeit mischbar ist, welche verwendet wird, um den zweiten Aerosolstrom zu erzeugen, und die nach dem Kontakt den Ablauf einer homogenen Reaktion ermöglicht.

7. Verfahren zur Herstellung von Pulverteilchen nach Anspruch 5, **dadurch gekennzeichnet, dass** der erste Aerosolstrom unter Verwendung einer Flüssigkeit erzeugt wird, die mit der Flüssigkeit, welche zur Erzeugung des zweiten Aerosolstromes verwendet wird, nicht mischbar ist, wodurch nach dem Kontakt der Ablauf einer heterogenen Reaktion ermöglicht wird.

8. Verfahren zur Herstellung von Pulverteilchen nach den Ansprüchen 6 oder 7, **dadurch gekennzeichnet, dass** die Flüssigkeit des ersten Aerosolstromes ein erstes Reagenz und die Flüssigkeit des zweiten Aerosolstromes ein zweites Reagenz umfasst und die Reaktion eine chemische Reaktion ist.

9. Verfahren zur Herstellung von Pulverteilchen nach einem oder mehreren der vorhergehenden Ansprüche, **dadurch gekennzeichnet, dass** zumindest der erste Aerosolstrom, welcher größere Partikel sowie Begleitpartikel umfasst, einem Partikelabsonderungsschritt ausgesetzt wird, welcher einen im Wesentlichen monodispergierten Aerosolstrom erzeugt, wonach der im Wesentlichen monodispergierte Aerosolstrom mit dem entgegengesetzt geladenen Aerosolstrom in Kontakt gebracht wird.

10. Verfahren zur Herstellung von Pulverteilchen nach Anspruch 9, **dadurch gekennzeichnet, dass** sowohl der erste als auch der zweite Aerosolstrom dem Partikelabsonderungsschritt ausgesetzt werden.

11. Verfahren zur Herstellung von Pulverteilchen nach Anspruch 9 oder 10, **dadurch gekennzeichnet, dass** der Absondenmgsschritt unter Verwendung einer geerdeten Elektrode ausgeführt wird.

12. Verfahren zur Herstellung von Pulverteilchen nach Anspruch 4, **dadurch gekennzeichnet, dass** das Lösungsmittel vom ersten Aerosolstrom verdampft wird, um einen ersten Aerosolstrom zu bilden, welcher feste, haltbar geladene Partikel umfasst, und welcher mit dem zweiten geladenen Aerosolstrom in Kontakt gebracht wird, welcher feste geladene Teilchen umfasst und einen kombinierten Aerosolstrom ergibt, welcher in ein im Wesentlichen trockenes Pulver konvertiert wird.

13. Verfahren zur Herstellung von Pulverteilchen nach einem oder mehreren der vorhergehenden Ansprüche, **dadurch gekennzeichnet, dass** im Wesentlichen neutrale Partikel von den im Wesentlichen geladenen Partikeln abgesondert werden.

14. Verfahren zur Zubereitung eines pharmazeutischen Präparates, wobei das pharmazeutische Präparat ein Pulver enthält, welches mindestens eine pharmazeutisch aktive Komponente zusammen mit einem pharmazeutisch zulässigen Träger bzw. einer Verdünnung umfasst, **dadurch gekennzeichnet, dass** die pharmazeutische Komponente Pulverteilchen umfasst, die nach einem oder mehreren der Patentansprüche 1 bis 13 hergestellt sind.

15. Verfahren nach Anspruch 14, **dadurch gekennzeichnet, dass** die pharmazeutische Komponente, welche Pulverteilchen umfasst, aus beschichteten Pulverteilchen besteht.

16. Verfahren zur Herstellung eines keramischen Produktes, **dadurch gekennzeichnet, dass** die keramischen Ausgangspulverteilchen nach einem oder mehreren der Patentansprüche 1 bis 13 hergestellt sind, und die Teilchen danach gesintert werden.

17. Elektrode, welche zur Verwendung in dem Verfahren nach einem oder mehreren der Ansprüche 1 bis 14 geeignet ist, welche einen Einlass und einen Auslass sowie einen Kanal, der den Einlass und den Auslass verbindet, aufweist, wobei der Auslass eine Öffnung in der Mitte einer elektrisch leitenden Fläche ist, und die elektrisch leitende Fläche durch eine Barriere gebildet wird, und die Barriere das Abfließen von Flüssigkeit von der elektrisch leitenden Fläche nach außen verhindert, **dadurch gekennzeichnet, dass** die elektrisch leitende Fläche von einer zweiten Fläche aus elektrisch leitendem Material umgeben ist, die sich von der Barriere in radialer Richtung über mindestens 1 mm nach außen erstreckt.

18. Elektrode nach Anspruch 17, **dadurch gekennzeichnet, dass** die zweite Fläche sich über einen Abstand von mindestens der Hälfte des Radius der ersten Fläche erstreckt.

19. Vorrichtung zur Durchführung des Verfahrens nach einem oder mehreren der Ansprüche 1 bis 13, umfassend eine Elektrode mit einem Einlass und einem Auslass, einen Kanal, welcher den Einlass und den Auslass miteinander verbindet, wobei der Auslass eine Öffnung in der Mitte einer elektrisch leitenden Fläche ist, die in eine Kammer führt, wobei die elektrisch leitende Fläche durch eine Barriere gebildet wird, und die Barriere den Abfluss von Flüssigkeit über die elektrisch leitende Fläche hinaus verhindert, und die Kammer eine Gegenelektrode sowie eine Austrittsöffnung für ein Produkt aufweist, welches durch elektro-hydrodynamisches Sprühen gebildet wird, **dadurch gekennzeichnet, dass** die Kammer eine Mischkammer ist, und die Vorrichtung mit einer zweiten Elektrode versehen ist, welche eine Auslassöffnung in die Kammer besitzt.

## Revendications

1. Procédé pour la production de particules d'une poudre sèche en engendrant un courant d'aérosol chargé constitué de particules initialement liquides chargées et en convertissant ledit courant en particules de poudre, **caractérisé en ce que** le courant d'aérosol chargé constitué de particules chargées, tandis qu'il comprend un liquide, est mis en contact avec un second courant d'aérosol comprenant des particules de charge opposée, lesdits courants d'aérosols étant engendrés par pulvérisation électrohydrodynamique, avec pour résultat un courant d'aérosols combinés pour former les particules de poudre sèche, les particules ayant la composition désirée étant séparées en fonction du rapport de leur charge à leur masse après la mise en contact du premier courant d'aérosol avec le second courant d'aérosol.

2. Procédé pour la production de particules d'une poudre suivant la revendication 1, **caractérisé en ce que** la quantité de charge du premier courant d'aérosol et la quantité de charge du second courant d'aérosol sont ajustées pour obtenir des particules de poudre pratiquement neutres.

3. Procédé pour la production de particules d'une poudre suivant la revendication 1 ou 2, **caractérisé en ce que** le premier courant d'aérosol est constitué de particules liquides comprenant un solvant et un soluté, ledit solvant étant évaporé pour obtenir des particules de poudre pratiquement sèche.

4. Procédé pour la production de particules d'une poudre suivant la revendication 3, **caractérisé en ce que** le premier courant d'aérosol et le second courant d'aérosol sont mis en contact avant l'évaporation du solvant.

5. Procédé pour la production de particules d'une poudre suivant l'une quelconque des revendications précédentes, **caractérisé en ce que**, lors de la mise en contact, le premier courant d'aérosol et le second courant d'aérosol comprennent tous deux des particules liquides chargées.

6. Procédé pour la production de particules d'une poudre suivant la revendication 5, **caractérisé en ce que** le premier courant d'aérosol est engendré en utilisant un liquide qui est miscible avec le liquide utilisé pour engendrer le second courant d'aérosol, ce qui permet à une réaction homogène de se produire après la mise en contact.

7. Procédé pour la production de particules d'une poudre suivant la revendication 5, **caractérisé en ce que** le premier courant d'aérosol est engendré en utilisant un liquide qui est non miscible avec le liquide utilisé pour engendrer le second courant d'aérosol, ce qui permet à une réaction hétérogène de se produire après la mise en contact.

8. Procédé pour la production de particules d'une poudre suivant la revendication 6 ou 7, **caractérisé en ce que** le liquide du premier courant d'aérosol comprend un premier réactif et le liquide du second courant d'aérosol comprend un second réactif et la réaction comprend une réaction chimique.

9. Procédé pour la production de particules d'une poudre suivant l'une quelconque des revendications précédentes, **caractérisé en ce qu'**au moins le premier courant d'aérosol, constitué de particules plus grandes et de particules satellites, est soumis à une étape de séparation des particules donnant un courant d'aérosol pratiquement monodispersé, le courant d'aérosol pratiquement monodispersé étant ensuite mis en contact avec le courant d'aérosol de charge opposée.

10. Procédé pour la production de particules d'une poudre suivant la revendication 9, **caractérisé en ce que** le premier courant d'aérosol et le second courant d'aérosol sont tous deux soumis à l'étape de séparation de particules.

11. Procédé pour la production de particules d'une poudre suivant la revendication 9 ou 10, **caractérisé en ce que** l'étape de séparation est mise en oeuvre en utilisant une électrode à la terre.

12. Procédé pour la production d'une poudre suivant la revendication 4, **caractérisé en ce que** le solvant est évaporé du premier courant d'aérosol pour former un premier courant d'aérosol, constitué de particules solides adhésives chargées, qui est mis en contact avec le second courant d'aérosol chargé comprenant des particules solides chargées, avec pour résultat le courant d'aérosols combinés qui est converti en une poudre pratiquement sèche.

13. Procédé pour la production de particules d'une poudre suivant l'une quelconque des revendications précédentes, **caractérisé en ce que** les particules pratiquement neutres sont séparées des particules substantiellement chargées.

14. Procédé pour la préparation d'une composition pharmaceutique, ladite composition pharmaceutique comprenant une poudre comprenant au moins un composé pharmaceutiquement actif conjointement avec un support ou diluant pharmaceutiquement acceptable, **caractérisé en ce que** des particules de poudre comprenant un composé pharmaceutique sont produites suivant l'une quelconque des revendications 1 à 11.

15. Procédé suivant la revendication 14, **caractérisé en ce que** le composé pharmaceutique comprenant des particules de poudre est constitué de particules de poudre enrobées.

16. Procédé pour la production d'un produit céramique, **caractérisé en ce que** des particules de poudre de précurseur céramique sont produites suivant l'une quelconque des revendications 1 à 13, puis lesdites particules sont frittées.

17. Electrode, apte à l'utilisation dans le procédé suivant l'une quelconque des revendications 1 à 14, ayant un orifice d'admission et un orifice de sortie, un canal reliant l'orifice d'admission et l'orifice de sortie, l'orifice de sortie étant un orifice au centre d'une zone électriquement conductrice, dans laquelle la zone électriquement conductrice est définie par une barrière, ladite barrière empêchant l'écoulement de liquide à l'extérieur de la zone électriquement conductrice, **caractérisée en ce que** la zone électriquement conductrice est entourée par une seconde zone de matière électriquement conductrice, s'étendant vers l'extérieur sur au moins 1 mm dans la direction radiale à partir de ladite barrière.

18. Electrode suivant la revendication 17, **caractérisée en ce que** la seconde zone s'étend sur une distance d'au moins la moitié du rayon de la première zone.

19. Appareil pour la mise en oeuvre du procédé suivant l'une quelconque des revendications 1 à 13, comprenant une électrode ayant un orifice d'admission et un orifice de sortie, un canal reliant l'orifice d'admission et l'orifice de sortie, l'orifice de sortie étant un orifice au centre d'une zone électriquement conductrice s'ouvrant dans une chambre, dans lequel la zone électriquement conductrice est définie par une barrière, ladite barrière empêchant l'écoulement de liquide au-delà de la zone électriquement conductrice et la chambre comprenant une contre-électrode ainsi qu'un orifice d'évacuation pour un produit formé par pulvérisation électrohydrodynamique, **caractérisé en ce que** la chambre est une chambre de mélange et l'appareil est muni d'une seconde électrode ayant un orifice s'ouvrant dans la chambre.
